(19) Europäisches Patentamt
European Patent Office
Office européen des brevets

(11) EP 2 412 689 A2

(12) EUROPEAN PATENT APPLICATION

(43) Date of publication:
**01.02.2012 Bulletin 2012/05**

(51) Int Cl.:
***C04B 28/02*** *(2006.01)* ***C04B 40/00*** *(2006.01)*

(21) Application number: **11174975.0**

(22) Date of filing: **22.07.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.07.2010 KR 20100071789**

(71) Applicant: **Silkroad C&T Co., LTD**
**Seocho-gu**
**Seoul 137-070 (KR)**

(72) Inventors:
- **Cha, Cheol Yong**
  **Gyeonggi-do 445-170 (KR)**
- **Park, Kwang Young**
  **Gyeonggi-do 446-909 (KR)**
- **Choi, Young Kook**
  **Chungcheongnam-do 331-172 (KR)**
- **Jang, Myung Wook**
  **Gyeongsangbuk-do 790-885 (KR)**
- **Hwang, Sung Hoon**
  **Seoul 137-070 (KR)**

(74) Representative: **Körfer, Thomas**
**Mitscherlich & Partner**
**Patent- und Rechtsanwälte**
**Sonnenstrasse 33**
**80331 München (DE)**

(54) **Nano-hybrid concrete chemical admixture for chloride invasion resistance consisting of layered double hydroxide/polyurethane copolymer**

(57) The present invention relates to a chloride penetration resistant nano-hybrid concrete chemical admixture comprising layered double hydroxide and polyurethane copolymer. More specifically, nano-hybrid concrete chemical admixture obtained by combining the two compounds at a nano-scale, the layered double hydroxide which exhibits resistance to chloride penetration, and polyurethane copolymer which entails an excellent water reducing ability, durability and workability. In addition, the inorganic/organic hybrid material described herein exhibits high water reducing ability, improved resistance to chloride penetration, and thus can be used as chloride penetration resistant concrete chemical admixture for marine concretes.

FIG. 1

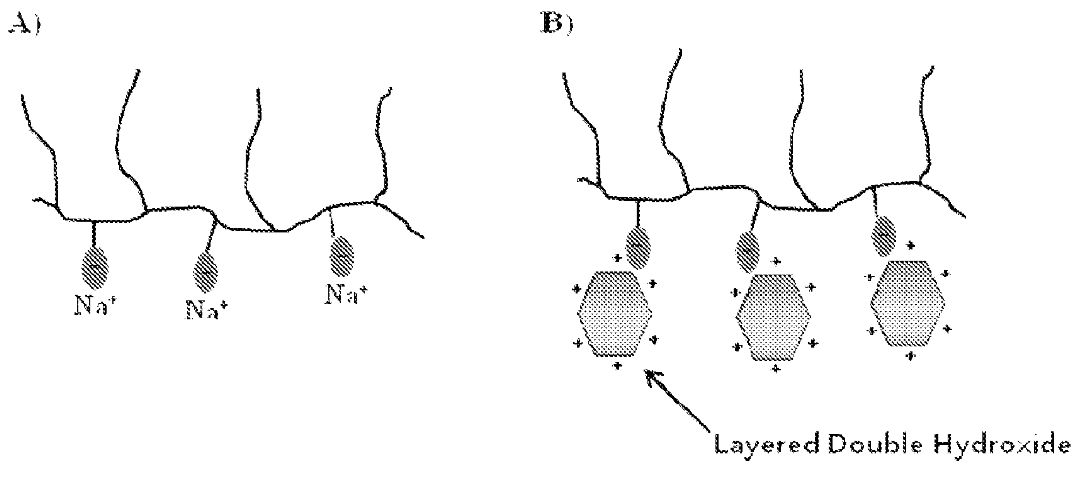


EP 2 412 689 A2

## Description

This application claims the benefit of Korean Patent Application No. 10-2010-0071789, filed in the Korean Intellectual Property Office on July 26, 2010, which is hereby incorporated by reference as if fully set forth herein.

## BACKGROUND OF THE INVENTION

### Field of the Invention

The present invention relates to nano-hybrid chemical admixture for chloride invasion resistance consisting of layered double hydroxide/polyurethane copolymer. More specifically, the present invention relates to concrete chemical admixture consisting of nano-hybridized layered double hydroxide (a) and polyurethane copolymer (b) using nano-hybrid technology, wherein the concrete chemical admixture for chloride invasion resistance consists of 5 to 50% by weight of layered double hydroxide (a) and 50 to 95% by weight of polyurethane copolymer (b).

### Description of the Related Art

Concrete chemical admixture is generally used as water reducing agent and plasticizer for concrete composition such as cement paste, mortar and concrete, which are required to form structural materials for civil engineering and construction.

Since concrete chemical admixture generally has large surface tension, it is least affected by the difference in concentration, and consequently, usage of a large amount of concrete chemical admixture significantly improves the compressive strength of produced concrete without causing deterioration in chemical and physical properties during production [J.T. Song et al. Jour. of Kor. Ceramic Soc., Vol. 41, 302~312, 2004]. Preferred is concrete chemical admixture with high water reducing ability, small slump/flow loss, excellent durability and workability.

Conventional concrete chemical admixture includes polycarboxylic acid-based concrete chemical admixture; or sulfonate-based concrete chemical admixture in the form of sulfonate, such as naphthalene, melamine or lignin sulfonate. A generally used polycarboxylic acid-based concrete chemical admixture exhibits high water reducing ability and watertightness, but it has poor resistance to chloride invasion, and thus, cannot prevent corrosion of the reinforcing steel in the concrete structures or buildings caused by the invaded chloride.

Meanwhile, marine constructions are being actively developed for the effective usage of national territories with rapidly increasing populations. However, there are some restrictions in applying conventional concrete chemical admixture directly to marine concrete structures. More specifically, if conventional concrete chemical admixture in the form of sulfonate, such as naphthalene, melamine, or lignin sulfonate is applied to marine concrete structures, the sulfonate ingredient causes crack accelerating deterioration of the structures [Pierre-Claude Aitcin, Binders for Durable and Sustainable Concrete, 146-205].

As to the polycarboxylic acid-based acid concrete chemical admixture, unlike other concrete admixture in the form of the sulfonate, it does not cause chemical reactions by the sulfate ions. In addition, the polycarboxylic acid-based concrete chemical admixture can impart watertightness to concrete structures, preventing chloride penetration to a certain extent, but it still cannot prevent chloride ion penetration fully.

After 1950's, washed sea sand was proposed to use in the field of the construction of buildings because the situation on the production of the concrete aggregate was getting worse due to the restriction on collecting the river sand all around the world, especially in Japan and England. Thus, washed sea sand and land sand (desert sand, crushed sand and mountain sand) are recently being widely used, instead of river sand. However, since washed sea sand contains a large amount of chloride ion, it causes the corrosion of reinforcing steel in the concrete structures or buildings, and accordingly, leads to decrease in durability of steel concrete structures. Further, this also leads to decrease life span due to the crack created by the deterioration of steel concrete structures. Therefore, it is necessary to add a corrosion inhibitor which can prevent the corrosion of reinforcing steel.

Generally used corrosion inhibitors are mainly comprised nitrite compound, which are inorganic-based compound. However, the used amount of such nitrite compounds is limited in the concrete composition for the purpose described above, due to alkali aggregate reaction, which is caused by the released alkaline metal ion (positive) from the nitrite ion (negative) in the concrete composition.

In addition, the above nitrite based corrosion inhibitor itself cannot impart water reducing ability or workability to the obtained concrete, and thus, must be used in combination with concrete chemical admixture. This brings the necessity for the concrete chemical admixture with the capability of preventing chloride invasion in the field of the concrete composition.

Meanwhile, layered double hydroxide (LDH) is a chemical compound comprising two-dimensional layered structure and can be anionic clay, which is hydrotalcite-analogue or brucite-analogue compound. The layered double

hydroxide is generally expressed in the chemical formula of $[M^{II+}_{1-x}NN^{III}_{x}(OH)_2]$ $[A^{m-}]_{x/m}.nH_2O$, wherein $M^{II+}$ and $N^{III+}$ independently represent metal cations, respectively, and $A^{m-}$ represents anions within the double layer. Layered double hydroxide has high anion exchange capacity, various chemical composition, good swelling properties, good biocompatibility and affinity to carbonate ion. Thus, it can have been used in the various fields such as biomimetics application, anion exchanger, stabilizer, absorber, halogen scavenger, catalyst, catalyst support, precursor, etc. [V. Rives, Layered Double Hydroxides: Present and Future, 2001, Nova Science Publisher Inc., New York, V. Rives, 2002, Meter. Chem. Phys., 75, (2002), 19. etc.]

The layered double hydroxide described herein not only exists naturally, but also can be synthesized artificially and undergoes phase changes while going through dehydration, deoxidisation and deionisation, depending on the method of synthesis, the way of processing, or its thermal behavior.

The above layered double hydroxide, as an inorganic compound, is resistant to heat and unharmful to human being, and it has an excellent ability of scavenging chloride ions existing within the double layered structure, and thus can improve thermal stability and flame retardancy of a polymer resin comprising the layered double hydroxide above (Korean Patent No. 10-0548645, 10-0527978, 10-0370961, 10-0909220, European Patent Publication No. 1 262 499 A1, US Patent No. 5,447,969 and so on).

However, as described in the previous patents publications and applications, layered double hydroxide has been applied in various fields including polymer resins, catalysts, filters and bio-inspired applications, but never has been used in the field of construction materials such as concrete.

## SUMMARY OF THE INVENTION

Therefore, the object of the present invention is to provide nano-hybrid concrete chemical admixture for chloride invasion resistance comprising layered double hydroxide and polyurethane copolymer (also referred as "layered double hydroxide/polyurethane copolymer" sometimes) to prevent chloride ion-induced degradation of marine civil engineering structures and to prevent the degradation of concrete composition due to wide use of deicing chemicals such as calcium chloride during the winter seasons.

In order to achieve the object of the present invention provided is concrete chemical admixture comprising layered double hydroxide (a) represented by the Formula (I), and a polyurethane copolymer (b).

$$[M^{2+}_{1-x}N^{3+}_{x}(OH)_2]\ [A^{n-}]_{x/n}\cdot yH_2O \qquad \text{Formula (I)}$$

in which, $M^{2+}$ represents a divalent metal cation and $N^{3+}$ represents a trivalent metal cation; $A^{n-}$ represents an anion, which is bonded through ionic bonding within the layer of the hydroxide; and n represents a charge number; x is a number greater than 0 and less than 1; and y represents a positive integer.

The layered double hydroxide (a) is present in an amount of 5 to 50 wt% and the polyurethane copolymer (b) is present in an amount of 50 to 95 wt%, based on the total weight of the concrete chemical admixture obtained.

In the Formula (I) above, $M^{2+}$ is selected from the group consisting of $Mg^{2+}$, $Ca^{2+}$, $Co^{2+}$, $Cu^{2+}$, $Ni^{2+}$ and $Zn^{2+}$; and $N^{3+}$ is selected from the group consisting of $Al^{3+}$, $Cr^{3+}$, $Fe^{3+}$, $Ga^{3+}$, $In^{3+}$, $V^{3+}$ and $Ti^{3+}$. In the Formula (I), $A^{n-}$ is selected from the group consisting of $NO_2^-$, $NO_3^-$, $CO_3^{2-}$, $OH^-$, $O^{2-}$, $SO_4^{2-}$, halide, metalate and an organic acid anion.

The layered double hydroxide may comprise a layered structure sized in the range of 50 to 300 nm. The distance between the layers of the layered double hydroxide may be 0.75 to 0.85 nm (7.5 to 8.5 Å).

The polyurethane copolymer (also referred as 'the polyurethane polymer copolymer, sometimes) can be prepared by polymerizing 10 to 95% by weight of at least one unsaturated (meth)polyoxyalkylene urethane compound represented by the Formula (II) and 5 to 50% by weight of at least one unsaturated anionic organic monomer represented by the Formula (III). The weight percents are based on the total weight of polyurethane copolymer (b).

Formula (II)

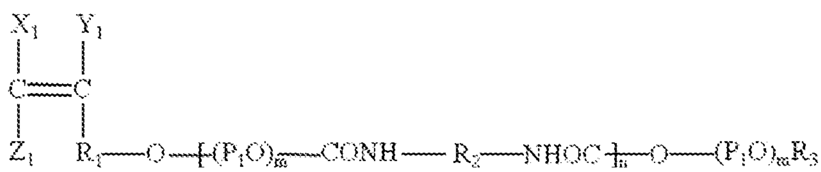

In the Formula (II) above, $X_1$, $Y_1$ and $Z_1$ are each independently identical or different and are selected from the group consisting of hydrogen (-H), a methyl group ($-CH_3$) and a carboxylic group (-COOH); $R_1$ represents a $C_1$-$C_6$ hydrocarbon or a ketone; $R_2$ represents a $C_1$-$C_6$ aromatic group, a $C_3$-$C_{12}$ ring shaped hydrocarbon, or a $C_1$-$C_6$ hydrocarbon; $R_3$ represents hydrogen (-H), or a $C_1$-$C_6$ hydrocarbon; $P_1O$ represents at least one or two $C_2$-$C_{20}$ oxyalkylene group; m is the mean addition number of moles of the oxyalkylene group and represents an integer of 1 to 100; and n is an average mole number of repeat units and represents an integer of 3 to 150.

Formula (III)

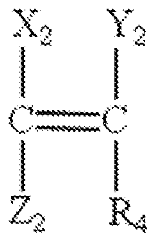

In the Formula (III) above, $X_2$, $Y_2$ and $Z_2$ are each independently identical or different and are selected from the group consisting of hydrogen (-H), a methyl group ($-CH_3$) and a carboxylic group (-COOH), provided that one of $X_2$, $Y_2$ and $Z_2$ is hydrogen; and $R_4$ represents a carboxylic group (-COOH) or a nitrile group (-CN).

The unsaturated (meth)polyoxyalkylene urethane compound represented by the Formula (II) above can be prepared by an addition of either an unsaturated organic acid or unsaturated alcohol to urethane-polyoxyalkylene derivatives.

The suitable unsaturated organic acid can be selected from the group consisting of mono-carboxylic acid, dicarboxylic acid and combination thereof. The unsaturated alcohol can be selected from the group consisiting of vinyl alcohol, (meth)allyl alcohol, 3-buten-1-ol, isoprene alcohol, 3-methyl-2-buten-1-ol, 2-methyl-3-buten-1-ol, 2-methyl-3-buten-2-ol, 2-methyl-2-buten-1-ol and combinations thereof.

The urethane derivative used for the preparation of the unsaturated organic acid-polyoxyalkylene urethane compound may be a diisocyanate derivative with a $C_6$ aromatic hydrocarbon, a $C_3$-$C_{12}$ cyclic hydrocarbon or a $C_1$-$C_6$ linear hydrocarbon.

The polyoxyalkylene derivative can be selected from the group of consisting of ethylene glycol, propylene glycol, butylene glycol, isobutylene glycol and combinations thereof. The mean addition number of moles of the polyoxyalkylene group, m represents a number of 6 to 100. The unsaturated anionic organic monomer (d) above can be selected from the group consistion of unsaturated monocarboxylic acid monomer, unsaturated dicarboxylic acid monomer, unsaturated nitrile monomer and combinations thereof.

In accordance with the present invention, nano-hybrid concrete chemical admixture comprising layered double hydroxide/polyurethane copolymer for chloride resistant concrete, which is readily absorbed to surfaces of cement particles even in strong alkaline conditions of concrete slurry, and thus, exhibits high water-reducing ability, improved slump retention and enhanced workability is provided.

More specifically, the present invention is directed to nano-hybrid concrete chemical admixture by layered double hydroxide and polyurethane copolymer for chloride resistant concrete, which can regulate anti-corrosion function, fluidity and viscosity of marine concrete structures. This in turn results in high workability and high watertightness of concrete, preventing material segregation and decrease in the strength of concrete. Particularly, the present invention is directed to nano-hybrid chemical admixture by layered double hydroxide and polyurethane copolymer for chloride resistant concrete, which can improve anti-corrosion capability, watertightness and durability of marine concrete.

It is to be understood that both the foregoing general description and the following detailed description of the present invention are exemplary and explanatory and are intended to provide further explanation of the invention as claimed.

## Brief description of drawings

The accompanying drawings, which are included to provide a further understanding of the invention and are incorporated in and constitute a part of this application, illustrate embodiment(s) of the invention and along with the description serve to explain the principle of the invention. In the drawings:

FiG. 1 is a diagram to explain one of general concrete chemical admixture based on polycarboxylic acid polymer, and more specifically, FIG. 1A shows concrete chemical admixture of polycarboxylic acid polymer, and Fig. 1B shows chloride-resistant nano-hybrid chemical admixture including layered double hydroxide and polyurethane copolymer according to the present invention.

FIG. 2 is the mechanism of chloride penetration resistance of the layered double hydroxide, a component of the nano-hybrid chemical admixture according to the present invention. In the drawing of FIG. 2, $A^-$ represents anions such as chlorides, which are penetrated in large amounts in marine concrete structures and cause corrosion, and sulphates, which exist in conventional concrete chemical admixture such as polycarboxylic concrete chemical admixture and also cause corrosion. In addition, B represents anion with anti-corrosion capability. Since $A^-$ has a greater negative charge than $B^-$, an anion exchange reaction occurs between $A^-$ and $B^-$.

FIG. 3 shows the X-ray diffraction of the layered double hydroxide. In the drawing of FIG. 3, (A) is related to X-ray diffraction of naturally existing layered double hydroxide and (B) shows that of synthesized layered double hydroxide according to the present invention.

FIGs. 4A to 4D are the TEM images of the naturally existing layered double hydroxide and the layered double hydroxide prepared according to present invention, respectively. FIGs. 4A and 4B are a surface structure and an internal structure of the naturally existing layered double hydroxide, while FIGs. 4C and 4D show a surface structure and an internal structure of the layered double hydroxide prepared according to the present invention, respectively.

FIG. 5 shows the UV spectroscopy patterns of layered double hydroxide. In the graph, (A) stands for the naturally existing layered double hydroxide and (B) stands for the layered double hydroxide prepared according to the present invention.

FIG. 6 shows an image from the corrosion test of reinforcing steel according to Example 4, which was immersed in 3.5% standard chloride water and 3.5% standard chloride water containing nano-hybrid chemical admixture by layered double hydroxide and polyurethane copolymer for chloride resistant concrete according to the present invention. In the pictures, (A) represents a 3.5% standard chloride solution containing $Ca(NO_2)_2$, (B) represents a 3.5% standard chloride solution and (C) represents 3.5% standard chloride water containing nano-hybrid chemical admixture by layered double hydroxide and polyurethane copolymer for chloride resistant concrete prepared according to the present invention.

FIGs. 7A to 7F show the results of an accelerated corrosion test of reinforcing steel in KS F 2561 concretes. FIGs. 7A, 7C and 7E show the results of the accelerated corrosion test of reinforcing steel in concretes in which only polycarboxylic acid copolymer is used as a concrete chemical admixture(Comparative Example 3). On the contrary, FIGs. 7B, 7D and 7F show the results of the accelerated corrosion test of reinforcing steel in concretes where the nano-hybrid chemical admixture prepared according to the present invention is used as a concrete chemical admixture(Example 3).

**Detailed description of the present invention**

The concrete chemical admixture prepared according to the present invention has a structure, which consists of an ionic interaction between layered double hydroxide and polyurethane copolymer, comprising a structure where anionic absorbent groups exist in the main chain and (meth)polyoxyalkylene urethane compounds are attached to the main chain as side chains thereof.

The layered double hydroxide represented by the Formula (I) below, exhibits an excellent capability of scavenging anions such as $Cl^-$ and $SO_4^{2-}$ existing within concrete composition and thus improves chloride penetration resistance of concrete.

$$[M^{2+}_{1-x}N^{3+}_{x}(OH)_2]\,[A^{n-}]_{x/n}\cdot yH_2O \qquad \text{Formula (I)}$$

In formula (I) above, M represents a divalent metal cation, N represents a trivalent metal cation, A is an anionic chemical species with charge number n and water molecule, x is a number greater than 0 and less than 1, and y is an integer greater than 0.

The concrete chemical admixture prepared according to the present invention also comprises a polyurethane copolymer, which can be prepared from unsaturated (meth)polyoxyalkylene urethane compound represented by the Formula (II) and unsaturated organic monomer represented by the Formula (III).

Formula (II)

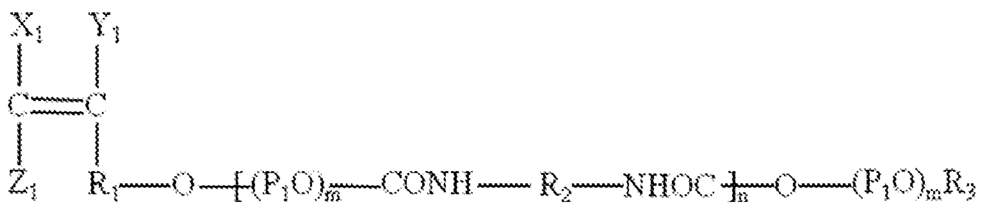

In the Formula (II) above, $X_1$, $Y_1$ and $Z_1$ are each independently identical or different and are selected from the group consisting of hydrogen (-H), a methyl group ($-CH_3$) and a carboxylic group (-COOH); $R_1$ represents, a $C_1$-$C_6$ hydrocarbon or a ketone; $R_2$ represents a $C_6$ aromatic group, a $C_3$-$C_{12}$ cyclic hydrocarbon or a $C_1$-$C_6$ linear hydrocarbon; $R_3$ represents hydrogen (-H) or a $C_1$-$C_6$ hydrocarbon; $P_1O$ represents one or two $C_2$-$C_{20}$ oxyalkylene group; m is the mean addition number of moles of the oxyalkylene group and represents an integer of 2 to 100; and n is an average mole number of repeat units and represents an integer of 3 to 150.

Formula (III)

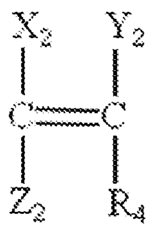

In the formula (III) above, $X_2$, $Y_2$ and $Z_2$ are each independently identical or different and are selected from the group consisting of hydrogen (-H), a methyl group ($-CH_3$) and a carboxylic group (-COOH), provided that one of $X_2$, $Y_2$ and $Z_2$ is hydrogen; and $R_4$ represents a carboxylic group (-COOH) or a nitrile group (-CN).

The polyurethane copolymer (b) has a good dispersion ability in cement compositions, due to hydrophillicity and steric hinderance of the (meth)polyoxyalkylene urethane group, which is a non-ionic hydrophilic group derived from unsaturated (meth)polyoxyalkylene urethane compound represented by the Formula (II), and has a strong affinity to cement particles due to anionic absorbents of monomer units in the polyurethane copolymer derived from unsaturated organic monomer (d) represented by the Formula (III).

The concrete chemical admixture prepared according to the present invention consists of 5 to 50% by weight of layered double hydroxide and 50 to 95% by weight of polyurethane copolymer, based on the total weight of layered double hydroxide and polyurethane copolymer.

The unit "% by weight" used herein refers to a weight ratio of the nano-hybrid chemical admixture by layered double hydroxide and polyurethane copolymer for chloride resistant concrete calculated based on the total weight of unit monomers, unless otherwise mentioned.

Hereinafter, nano-hybrid chemical admixture by layered double hydroxide and polyurethane copolymer for chloride resistant concrete comprising layered double hydroxide (a) and polyurethane copolymer (b) will be described in detail.

**<u>(a) layered double hydroxide (LDH)</u>**

Layered double hydroxide, one of the components of the nano-hybrid chemical admixture according to the present invention, is an inorganic nano-particle synthesised by isomorphic substitutions of divalent and trivalent metal cations, and is represented by Formula (I) below.

$$[M^{2+}_{1-x}N^{3+}_{x}(OH)_2]\,[A^{n-}]_{x/n}\cdot yH_2O \qquad \text{Formula (I)}$$

In the Formula (I), M represents a divalent metal cation, N represents a trivalent metal cation, A comprises an anionic compound with charge number n and water molecule, x is a number greater than 0 and less than 1, and y is a positive integer.

In the Formula (I) above, $M^{2+}$ is selected from the group consisting of $Mg^{2+}$, $Ca^{2+}$, $Co^{2+}$, $Cu^{2+}$, $Ni^{2+}$ and $Zn^{2+}$;

and $N^{3+}$ is selected from the group consisting of $Al^{3+}$, $Cr^{3+}$, $Fe^{3+}$, $Ga^{3+}$, $In^{3+}$, $V^{3+}$ and $Ti^{3+}$.

In the Formula (I), $A^{n-}$ is selected from the group consisting of $NO^{2-}$, $NO^{3-}$, $CO_3^{2-}$, $OH^-$, $O^{2-}$, $SO_4^{2-}$, halide, metalate and an organic acid anion.

The layered double hydroxide represented by the Formula (I) above has an excellent capability of scavenging chloride ions from concrete composition by anion exchange reaction, which may be described in brief by reaction scheme illustrated in FIG 2.

As illustrated in Fig 2, the electric attraction of anions existing between layers of layered double hydroxide has weaker than that of chloride ions, and thus, exchange reaction occurs between the anions existing in the layers and the chloride ions. Furthermore, during the exchange reaction, anions with anti-corrosion capability are released into concrete, and consequently, the released anions from the layers prevent the corrosion of reinforcing steel. An example of anions with anti-corrosion ability is $NO_2^-$ ion.

In an example of the layered double hydroxide (LDH) according to the present invention, the layered double hydroxide was synthesized with $NO_2^-$ ion between the layers of LDH, and therefore, $NO_2^-$ ions can prevent corrosion of reinforcing steel in concrete by anion exchange reaction such as the reaction illustrated in Fig 2.

Layered double hydroxide is present in an amount of 5 to 50 wt% in the nano-hybrid concrete chemical admixture comprising polyurethane copolymer and layered double hydroxide according to the present invention. Within the ranges described above, layered double hydroxide contains a sufficient number of anions with anti-corrosion capability incorporated between the layers, and thus, imparts sufficient chloride penetration resistance and dispersion ability and slump retention ability with time to concrete composition. If layered double hydroxide is present in a greater than the range described above, dispersing effects in concrete composition is not sufficient enough, and if layered double hydroxide is present in a lower than the 5 wt% in the nano-hybrid concrete chemical admixture, the strength and anti-corrosion capability of the concrete structure is deteriorated.

**(b) Polyurethane copolymer**

**(1) Unsaturated (meth)polyoxyalkylene urethane compound (c)**

Unsaturated (meth)polyoxyalkylene urethane compound (c), one of the monomer components of polyurethane copolymer, which is a component of the nano-hybrid chemical admixture by layered double hydroxide and polyurethane copolymer consists of a polymerizable unsaturated group, urethane derivatives and oxyalkylene chains. The unsaturated (meth)polyoxyalkylene urethane compound has a structure comprising urethane bond interactions and is represented by the Formula (II) below.

Formula (II)

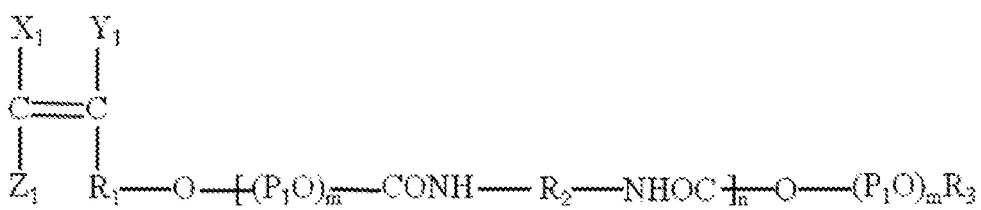

In the Formula (II), $X_2$, $Y_2$ and $Z_2$ are each independently identical or different and are selected from the group consisting of hydrogen (-H), a methyl group ($-CH_3$) and a carboxylic group (-COOH); $R_1$ represents $C_1$-$C_6$ hydrocarbon or a ketone; $R_2$ represents $C_6$ aromatic group, $C_3$-$C_{12}$ cyclic hydrocarbon or $C_1$-$C_6$ linear hydrocarbon; $R_3$ represents hydrogen (-H) or a $C_1$-$C_6$ hydrocarbon; $P_1O$ represents one or two $C_2$-$C_{20}$ oxyalkylene group; m is the mean addition number of moles of the oxyalkylene group and represents an integer of 2 to 100; and n is an integer of 1 to 50, an average mole number of repeat units. The average mole number [(m*n)+m] of oxyalkylene in the unsaturated (meth) polyoxyalkylene urethane compound is an integer of 50 to 100.

Unsaturated (meth)polyoxyalkylene urethane compound (c) comprises polyoxyalkylene-urethane derivative with an average mole number of 1 to 50 and preferably, 3 to 30 in order to exert desired functions.

In the Formula (II), the oxyalkylene unit represented by $P_1O$ is at least one $C_2$-$C_{20}$ alkylene oxide adducts. Such an alkylene oxide adduct is prepared from at least one alkylene oxide such as ethylene oxide, propylene oxide, butylene oxide and isobutylene oxide.

At least one oxyalkylene units can be introduced into the same unsaturated (meth)polyoxyalkylene urethane compound (c) by an addition reaction method such as random, block addition and alternating addition. When $P_1O$ contains two or more oxyalkylene units, these oxyalkylene units can be added as blocks or randomly added.

The mean addition number of moles of the oxyalkylene group represented by $P_1O$, m, is an integer of 2 to 100. When m is less than 2, the compound or monomer (c) can not obtain enough chain flexibility, and thus, can not gain enough steric hinderance in order to disperse cement particles in the concrete composition. Also, hydrophilicity of the oxyalkylene group may be insufficient to impart dispersion ability to the concrete composition. The range of m in the oxyalkylene unit ($P_1O$), the average mole number of the oxyalkylene group, is more preferably 6 to 50.

For example, the compound represented by the Formula (II) is an unsaturated organic acid-polyoxyalkylene urethane derivative, which is prepared by adding a polyoxyalkylene urethane to an organic acid chain containing an unsaturated group. Addition reaction of unsaturated organic acid-polyoxyalkylene urethane can be explained by the following Reaction Scheme in brief, for instance.

Reaction scheme 1

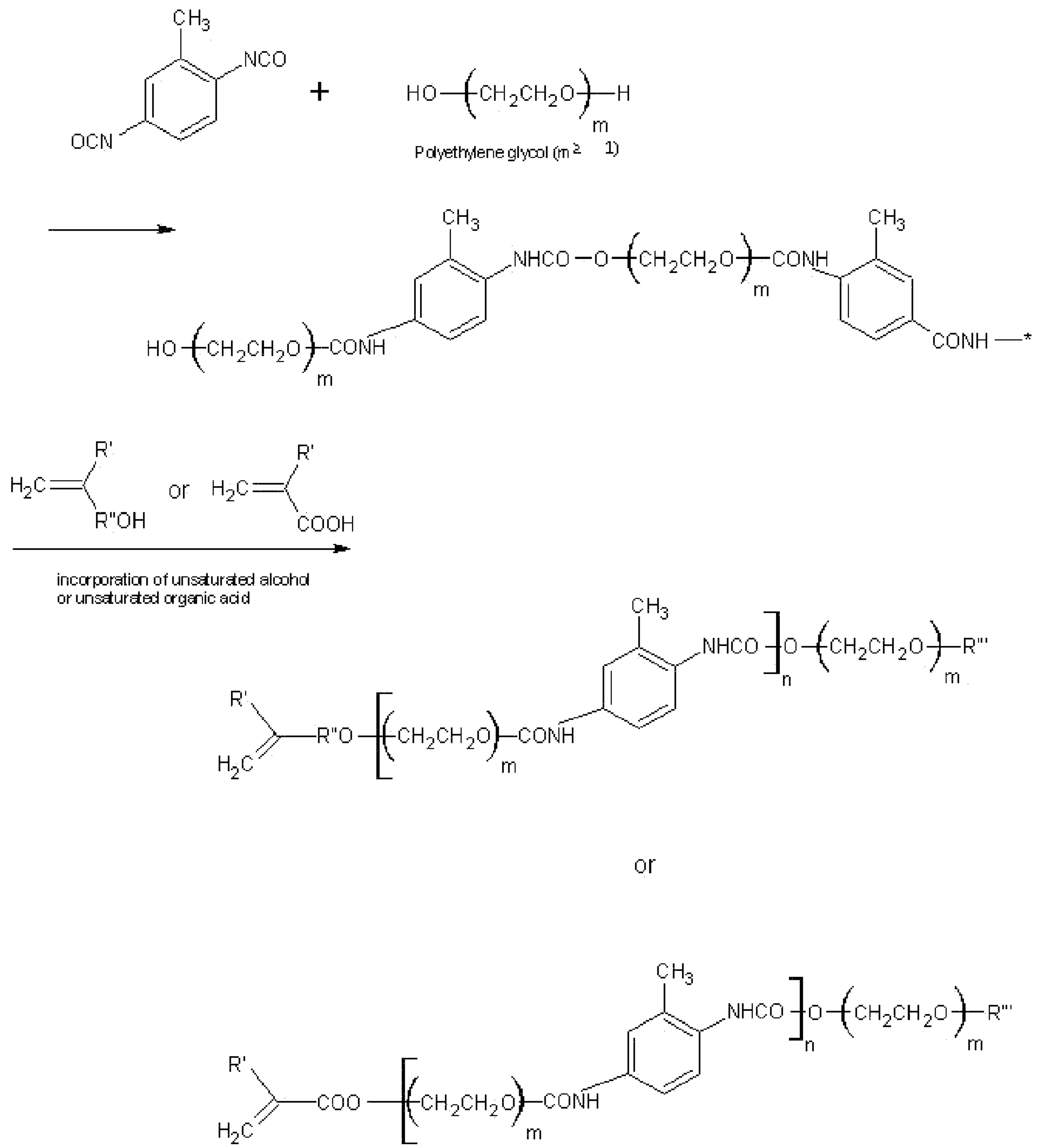


In the Reaction Scheme 1, R' is hydrogen (-H) or a methyl group ($-CH_3$), R" is hydroxyl group (-OH) or C1-C6 oxy-hydrocarbon, and m is an integer equal to or greater than 1.

As can be seen from the Reaction Scheme 1 above, the urethane derivative and a diol are reacted to obtain unsaturated organic acid-polyoxyalkylene urethane compound. And then, the resulting urethane compound is reacted with unsaturated organic acid or unsaturated alcohol.

The urethane derivative used for the preparation of the unsaturated organic acid-polyoxyalkylene urethane compound may be a diisocyanate derivative with aromatic hydrocarbon, cyclic or linear hydrocarbon, for example. More specifically, examples of diisocyanate derivatives comprising aromatic, cyclic or linear hydrocarbon are 2,4-toluene diisocyanate, methylenediphenyl-4,4'-diisocyanate, tetramethyl-1,3-xylene diisocyanate, para-phenylene diisocyanate, 1,6-hexymethylene diisocyanate, 1,5-naphthalene diisocyanate, isoprone diisocyanate or cyclohexylmethane diisocyanate but are not limited thereto.

In addition, examples of diols are polyethylene glycol, propylene glycol, butylene glycol and isobutylene glycol.

Examples of unsaturated organic acids used for the reaction are monocarboxylic acids such as acrylic acid,

methacrylic acid; and dicarboxylic acids such as maleic acid, itaconic acid, citraconic acid, fumaric acid, or mono-valent metal salt thereof, di-valent metal salt thereof, ammonium salts thereof, organic amine salts thereof or acid anhydride thereof. Examples of suitable unsaturated alcohols include vinyl alcohol, (meth)allyl alcohol, 3-buten-1-ol, isoprene alcohol, 3-methyl-2-buten-1-ol, 2-methyl-3-buten-1-ol, 2-methyl-3-buten-2-ol and 2-methyl-2-buten-1-ol.

The units derived from the unsaturated (meth)polyoxyalkylene urethane compound (c) in the polyurethane copolymer are present in an amount of 10 to 95% by weight based on the total weight of the obtained polyurethane copolymer. When the unit derived from the unsaturated (meth)polyoxyalkylene urethane compound (c) is less than 10 % by weight, the water reducing ability and viscosity cannot be sufficiently improved, and when the unit derived from the unsaturated (meth)polyoxyalkylene urethane compound (c) is more than 95 % by weight, the number of anionic absorbents capable of being absorbed to surfaces of cement particles decreases, and thus, dispersion ability of concrete composition is deteriorated. More preferably, the unit derived from the unsaturated (meth)polyoxyalkylene urethane compound (c) in the polyurethane copolymer obtained is 20 to 95 % by weight based on the total weight of the obtained polyurethane copolymer. Within this range, dispersion and slump retention ability with time of concrete composition is improved, as well as workability of concrete composition is also improved due to reduction of viscosity.

The unsaturated organic acid-polyoxyalkylene urethane adduct is a non-ionic and hydrophilic compound, containing a hard portion such as urethane derivative and a soft portion such as polyethylene glycol at the same time. The portions derived from the unsaturated organic acid-polyoxyalkylene urethane adduct are present as side chains in the copolymer for the concrete chemical admixture according to the present invention.

**(2) Unsaturated anionic organic monomer (d)**

Any monomer may be used as the unsaturated anionic organic monomer (d) so long as it has polymerizable unsaturated groups and anionic groups. For example, an unsaturated carboxylic acid monomer may be used.

The unsaturated carboxylic acid monomer or unsaturated nitrile monomer are preferred and represented by the Formula (III) below.

Formula (III)

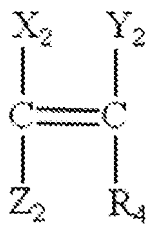

In the Formula (III), $X_2$, $Y_2$ and $Z_2$ are each independently identical or different and are selected from the group consisting of hydrogen (-H), a methyl group ($-CH_3$) and a carboxylic group (-COOH), provided that one of $X_2$, $Y_2$ and $Z_2$ is hydrogen; and $R_4$ represents a carboxylic group (-COOH) or a nitrile group (-CN).

For example, the unsaturated anionic organic monomer is selected from the group consisting of unsaturated mono-carboxylic acid monomer, unsaturated dicarboxylic acid monomer and unsaturated nitrile monomer.

The unsaturated mono-carboxylic acid monomer can be selected from a monomer having one unsaturated group and a functional group capable of producing a carboxylic anion within the molecule. Examples of the unsaturated mono-carboxylic acid monomer include acrylic acid and methacrylic acid, but are not limited thereto.

The unsaturated dicarboxylic acid monomer can be selected from monomers, which have one unsaturated group and two functional groups capable of forming carboxylic anions within the molecule. Examples of the unsaturated dicarboxylic acid monomer are maleic acid, itaconic acid, citraconic acid, fumaric acid and so on; monovalent metal salts thereof, bivalent metal salts thereof, ammonium salts thereof organic amine salts thereof; and anhydrides thereof, but are not limited thereto.

The unsaturated nitrile monomer can be selected from monomers, which have one unsaturated group and a nitrile group. Examples of unsaturated nitrile monomers include acrylonitrile, but are not limited thereto.

The unsaturated anionic organic monomer (d) in the polyurethane copolymer according to the present invention is present in an amount of 5 to 50% by weight, preferably, 5 to 40% by weight, based on the total weight of the nano-hybrid concrete admixture of the present invention. When the unsaturated anionic organic monomer (d) is less than 5

% by weight, the copolymer cannot be sufficiently absorbed to cement particles. When the monomer (d) exceeds 50% by weight, the copolymer cannot exert slump retention with time.

The unit monomers constituting the polyurethane copolymer may further include a third monomer ingredient as well as the afore-mentioned compound (c) and monomer (d). The third ingredient may be present in an amount of 0 to 30% by weight.

**(3) polymerization initiator (e) and other components (f)**

The polyurethane copolymer of the polyurethane copolymer/layered double hydroxide concrete chemical admixture is prepared by polymerizing the afore-mentioned compound or monomer (c) and monomer (d) together with a polymerization initiator (e).

The polymerization initiator is preferably persulfate, hydrogen peroxide, benzoyl peroxide, an azo compound, diacyl peroxide, or alkyl hydroperoxide. The polymerization initiator may be used alone or in combination thereof.

In the preparation of the polymer, the amount of a polymerization initiator can be determined according to the method known in the art.

In addition, a reducing agent may be further used as an accelerator (f). As a reducing agent, sodium hydrogen sulfite, sodium sulfite, formaldehyde sodium sulfoxylate, potassium persulfate or ascorbic acid may be used in combination with amines such as ethylene diamine, sodium ethylene diamine tetra-acetate and glycine. The amount of the reducing agent may be suitably controlled according to a method known in the art.

If necessary, a chain transfer agent may be used alone or in combination thereof. The amount of the chain transfer agent may be suitably controlled by those skilled in the art.

In the layered double hydroxide and polyurethane copolymer for nano-hybrid chemical admixture, the polyurethane copolymer is preferably present in an amount of 50 to 95% by weight based on the total weight of the concrete admixture. Within the above range, an anionic absorbent, which exists in the polyurethane polymer, is readily absorbed to surfaces of cement particles and imparts steric hinderance effect to urethane derivatives. This enhances slump retention with time, causes decrease in viscosity and ensures durability of concrete composition.

Hereinafter, a method for preparing the polyurethane copolymer for concrete chemical admixture by copolymerizing the compound or monomer (c) and monomer (d) with the polymerization initiator (e) will be described in detail.

**Method for preparing the polyurethane copolymer for concrete chemical admixture**

The present invention provides a method for preparing polyurethane copolymer by copolymerizing the compound or monomer (c) and monomer (d) together with the polymerization initiator (e) .

The preparation method of the polymer can be solution or bulk polymerization. The polymerization can be carried out in a batch, continuous or semi-continuous manner.

Examples of the solvent used for polymerization include water, alcohols, aromatic organic compounds, esters, ketones and so on. Specific examples include methyl alcohol, ethyl alcohol, isopropyl alcohol, benzene, toluene, cyclohexane, xylene, n-heptane, ethyl acetate, acetone and methyl ethyl ketone. The solvent can be used alone or in combination thereof.

In the process of the afore-mentioned polymerization, as to charging method of monomers and an initiator into a reactor can be selected from: a process which charges the monomers into the reactor and adds the initiator dropwise; a process charging a portion of monomers into the reactor and adding the initiator and the remaining monomers; and a process charging a solvent into the reactor and adding all of the monomers and the initiator dropwise.

Preferably, the polymerization can be carried out by: continuously dropwise adding the initiator and the monomers to a reactor; continuous polymerization, followed by secondary batch-type polymerization; or batch-type polymerization, followed by secondary continuous polymerization. The reason for using the methods above is that the molecular weight of the final polymer may be uniformalized. Therefore, it improves water-reducing ability and fluidity of cement or concrete composition, and thus, enhances slump retention capability.

Specifically, the method for preparing the polyurethane copolymer according to the present invention comprises:

i) charging a solvent into a reactor;

ii) adding at least one unsaturated (meth)polyoxyalkylene urethane compound (c) represented by the Formula (II), at least one unsaturated anionic organic monomer (d) represented by the Formula (III), and a polymerization initiator (e) dropwisely to the reactor during the predetermined time; and

iii) polymerizing the mixtures.

The alternative method comprises:

i) charging at least one compound or monomer of at least one unsaturated (meth)polyoxyalkylene urethane compound (c) represented by the Formula (II), and at least one unsaturated anionic organic monomer (d) represented by the Formula (III) together with a solvent into a reactor;

ii) adding the remaining compound or monomer and a polymerization initiator (e) dropwisely during the predetermined time; and

iii) polymerizing the mixtures.

The method for preparing the polyurethane copolymer may further comprise the step of neutralizing the resulting

polymer with an alkali. The alkali can be selected from mono-and di-valent metal hydroxides, chlorides, ammonia and organic amines.

The polymerization can be carried out using, in addition to the polymerization initiator (e), at least one accelerator (f). The accelerator (f) may be a reducing agent such as sodium hydrogen sulfite, sodium sulfite, formaldehyde sodium sulfoxylate, potassium persulfate or ascorbic acid, in combination with amines such as ethylene diamine, sodium ethylene diamine tetra-acetate and glycine. If necessary, a chain transfer agent may be used alone or in combination thereof.

The polymerization conditions, such as polymerization temperature or time, and other conditions may be suitably determined depending on polymerization methods, solvents, initiators and chain transfer agents. Generally, the polymerization temperature is in the range of 40°C to 180°C. Specifically, the polymerization temperature is in the range of 60°C to 100°C. The polymerization time is in the range of about one hour to about 24 hours. Specifically, the polymerization time is in the range of 2 to 12 hours.

The nano-hybrid chemical admixture by layered double hydroxide and polyurethane copolymer for chloride resistant concrete according to the present invention can be used in combination with at least one of concrete chemical admixture to a concrete composition. Preferably, the admixture according to the present invention can be used in combination with another admixture with high water-reducing ability and resistance to chloride penetration.

For example, the admixture with high water-reducing ability inherently contains a chloride penetration resistant layered double hydroxide and polyurethane copolymer with long urethane derivative-polyethylene glycol chains (three or more moles). The monomer to form layered double hydroxide and polyurethane copolymer nano-hybrid concrete chemical admixture comprises, as essential ingredients, an unsaturated (methoxy)polyoxyalkylene urethane compound and an organic acid monomer with unsaturated anionic absorbent. Preferably, layered double hydroxide is present in an amount of 5 to 50 % based on the total weight of the concrete chemical admixture for effective chloride resistance function. Polyurethane copolymer is present in an amount of 50 to 95% based on the total weight of the concrete chemical admixture in order to secure water reducing ability, slump retention function, durability and fall in viscosity.

The urethane derivative-polyethylene glycol chains have a length of 3 or more moles, more preferably, 6 to 150 moles, still more preferably, 10 to 100 moles.

By adding at least one of additional concrete admixture to the nano-hybrid concrete admixture according to the present invention as explained above, the obtained concrete admixture has various properties of the nano-hybrid concrete admixture. Thus, the obtained concrete admixture can improve water tightness and durability in the concrete structures based on water reducing ability, and it causes the improvement of the workability due to the reduction of viscosity of the concrete composition. In addition, since the layered double hydroxides described herein improve resistance to chloride penetration, the concrete admixture according to the present invention can be used for marine concretes.

**Method for preparing layered double hydroxide and polyurethane polymer for nano-hybrid concrete chemical admixture.**

The present invention provides a method for preparing layered double hydroxide and polyurethane polymer for nano-hybrid concrete chemical admixture, as described below, comprising of the steps:

preparing of layered double hydroxide (a) by co-precipitation;

preparing of polyurethane copolymer by polymerizing two or more compounds or monomers, in other words, at least one unsaturated (meth)polyoxyalkylene urethane compound (c) and a compound or a monomer ingredient containing at least one unsaturated organic monomer (d) with a polymerization initiator to obtain the polyurethane polymer (b); and

hybriding the obtained layered double hydroxide (a) and the obtained polyurethane polymer (b) described above by nano-hybrid technology.

A method for preparing nano-hybrid chemical admixture by layered double hydroxide and polyurethane copolymer for chloride resistant concrete according to the present invention can be selected from either hydrothermal method or reaction at high temperatures and high pressures. Preferred is the hydrothermal method.

Specifically, when layered double hydroxide and polyurethane polymer are combined using the hydrothermal method, the pH should be in the range of pH 4 to pH 7, preferably in the range of pH 5 to pH 7. Thus the anionic absorbent in the polyurethane copolymer becomes activated maximizing ionic interaction with layered double hydroxide and ensures the stability of the nano-hybrid concrete chemical admixture. The reaction temperature is in the range of 50°C to 150°C, and preferably in the range of 80°C to 100 °C. Within the range, dispersing ability and stability of layered double hydroxide are improved. The reaction time is in the range of 1 to 48 hours, preferably in the range of 6 to 24 hours. Within the range, dispersing ability and stability of the layered double hydroxide are also enhanced.

Now, the present invention will be described in more detail with reference to the following examples. These examples are provided only for illustrating the present invention and should not be construed as limiting the scope of

the present invention.

**Example 1**

**1. Preparation of the layered double hydroxide**

$Mg(NO_3)_2.6H_2O$(102 parts) and $Al(NO_3)_3.9H_2O$(75 parts) are dissolved in standard water and the resulting solution is titrated to the pH value of 9 to 10 using an aqueous NaOH solution of $NaNO_2$ (14 parts). The resulting suspension is stirred at 100°C for 12 hours and unreacted salts are eliminated through cleansing. The suspension is finally freezed and dried to obtain the layered double hydroxide.

**2. Preparation of the polyurethane copolymer**

The method charges 285 parts of distilled water into 1L glass reactor equiped with thermometer, a stirrer, a dropping funnel, a nitrogen induction pipe and a reflux condenser. The reactor is purged with nitrogen while stirring and is heated to 80°C under nitrogen atmosphere. After stirring, a solution consisting of 270 parts of unsaturated poly(meta) oxyethylene urethane compound (6 moles of urethane derivative-oxyethyene added), 55 parts of methacrylic acid and 50 parts of distilled water is added dropwise to the reactor over 5 hours. At the same time, an aqueous solution of 0.85 parts of ammonium persulfate in 50 parts of water is added to the reactor dropwise over 6 hours. After dropwise addition, the reaction mixture is allowed to stand at 80°C for one hour.

In addition, the reaction mixture is adjusted to pH 6 using sodium hydroxide to obtain a 50% solution of polyurethane copolymer with a weight average molecular weight of 31,000, based on polyethylene glycol equivalents (measured by gel permeation chromatography).

**3. Preparation of layered double hydroxide and polyurethane polymer for nano-hybrid concrete chemical admixture**

75% of the polyurethane copolymer and 25% of the layered double hydroxide are mixed and the resulting mixture is adjusted to the range of pH 6 to 7. In addition, the reaction mixture is charged into a hydrothermal reactor and goes through hydrothermal reaction at 80°C over 24 hours to obtain a chloride resistant nano-hybrid concrete chemical admixture (S-1) comprising polyurethane polymer and layered double hydroxide.

**Example 2 to Example 5**

Polyurethane copolymer is prepared in the same manner as Example 1 except for the fact that monomer composition shown in Table 1 below is used instead of monomer composition shown in Example 1. It is also combined with layered double hydroxide in the same manner as Example 1 to obtain concrete chemical admixture S-2 and S-5, respectively.

**Comparative Example 1**

285 parts of distilled water is charged into a 1L glass reactor equiped with a thermometer, a stirrer, a dropping funnel, a nitrogen induction pipe and a reflux condenser. The reactor is purged with nitrogen, while stirring, and was heated to 80°C under nitrogen atmosphere. Then, a solution consisting of 270 parts of unsaturated poly(methoxy) polyethyleneglycol monomethacrylate (6 moles of oxyethylene added), 55 parts of acrylic acid and 50 parts of distilled water are added to the reactor dropwise for 5 hours. At the same time, an aqueous solution of 0.85 parts of ammonium persulfate in 50 parts of water was added to the reactor dropwise for 6 hours.

After dropwise addition, the reaction mixture is kept at 80°C for one hour. In addition, the reaction mixture is adjusted to pH 6 using sodium hydroxide to obtain a 50% solution of polyurethane copolymer (C-1) with a weight average molecular weight of 27,000, based on polyethylene glycol equivalents (measured by gel permeation chromatography)

**Comparative Examples 2 to 5**

Polycarboxylic acid copolymers for concrete chemical admixture (C-2) to (C-5) were prepared in the same manner as Example 1 using monomer composition shown in Table 1 below.

**Comparative Example 6**

Chloride penetration resistant nano-hybrid concrete chemical admixture was prepared in the same manner as Example 1 except for the fact that it consisted 3% of layered double hydroxide and the remaining of polyurethane copolymer by weight.

**Comparative Example 7**

Chloride penetration resistant nano-hybrid concrete chemical admixture was prepared in the same manner as Example 1 except for the fact that 55% by weight of layered double hydroxide a) was contained and polyurethane copolymer constituted the remaining admixture.

**Table 1**

| | Copolymer No. | Composition ratio of copolymer (% by weight) | (a) : (b) | Solvent | Weight average molecular weight |
|---|---|---|---|---|---|
| Example 1 | S-1 | POEU-6/ MAA = 83/17 | 75 : 25 | Water | 31,000 |
| Example 2 | S-2 | POEU-10/ MAA = 77/23 | 75 : 25 | Water | 36,600 |
| Example 3 | S-3 | POEU-18/ MAA = 75/25 | 75 : 25 | Water | 37,500 |
| Example 4 | S-4 | POEU-25/ MAA = 70/30 | 75 : 25 | Water | 38,000 |
| Example 5 | S-5 | POEU-45/ MAA = 68/32 | 75 : 25 | Water | 41,000 |
| Comparative Example 1 | C-1 | MPEG-6/ MAA = 83/17 | 100 : 0 | Water | 27,000 |
| Comparative Example 2 | C-2 | MPEG-10/ MAA = 77/23 | 100 : 0 | Water | 29,000 |
| Comparative Example 3 | C-3 | MPEG-18/ MAA = 75/25 | 100 : 0 | Water | 30,600 |
| Comparative Example 4 | C-4 | MPEG-25/ MAA = 70/30 | 100 : 0 | Water | 36,500 |
| Comparative Example 5 | C-5 | MPEG-45/ MAA = 68/32 | 100 : 0 | Water | 41,300 |

**POEU-6, POEU-10, POEU-18, POEU-25, POEU-45:** unsaturated (meth)poly oxyethylene urethane compound (a) (The mean addition numbers of moles of urethane derivative-oxyethylene are 6, 10, 18, 25 and 45, respectively.)

**MPEG-6, MPEG-10, MPEG-18, MPEG-25, MPEG-45:** unsaturated poly methoxypolyethyleneglycol mono methacrylate (b) (The mean addition number of moles of ethylene oxide are 6, 10, 18, 25 and 45, respectively.)

**MAA:** methacrylic acid

AN: acrylonitirile

APS: ammonium persulfate

(a) Polyurethane copolymer and polycarboxylic copolymer

(b) Layered double hydroxide

**Experimental example 1: Analysis of X-ray diffraction of layered double hydroxide**

To evaluate crystal structure of the layered double hydroxide prepared above, x-ray diffraction (Rigaku, D/max 2200) was performed.

Naturally existing layered double hydroxide was used as a comparative reference for an accurate analysis of the structure. As can be seen from FIG. 3, the naturally existing layered double hydroxide, a typical layered structure with carbonate ions incorporated, showed approximately 0.76 nm of the distance between the layers.

The layered double hydroxide prepared according to the present invention had the equivalent structure as that of naturally existing layered double hydroxide, with nitrite ions incorporated, with the distance between the layers being approximately 0.80 nm.

**Experimental example 2: Transmission electron microscopy analysis of layered double hydroxide**

For detailed characterization of the crystal structure of the layered double hydroxide prepared in Example 1 above, high resolution transmission scanning microscopy (JEOL JEM-2100F) was operated.

Naturally existing layered double hydroxide was used as a comparative reference for an accurate analysis of the structure of the synthesized layered double hydroxide. For specimen measurement, each compound was fixed on epoxy resin, and a thin film with a thickness of 50 nm taken using Ultramacrotome, RMC, Power Tome PC, was placed on a 400 mesh Cu grid. The structure was then measured by low-temperature transmission electron microscopy (Cryo-TEM method) using carbon coating for static elimination.

As can be seen from FIG. 4, the naturally existing layered double hydroxide is a hexagonal crystal particle with a size of about 200 nm to 300 nm (FIG. 4A), comprising the layered structure with carbonate ions incorporated and the

distance between the layers being about 0.76 nm (FIG. 4B). In contrast, the layered double hydroxide prepared according to the present invention is a hexagonal crystal particle with a size of about 50 nm to 100 nm (FIG. 4C), comprising the layered structure with nitrite ions incorporated and the distance between the layers being about 0.80 nm (Fig. 4D).

The layered double hydroxide prepared according to the present invention thus has a smaller particle size and a larger specific surface area and consequently exhibits enhanced dispersibility, and greater capability in scavenging chloride ions than the naturally existing layered double hydroxide.

**Experimental example 3: Analysis of the layered double hydroxide using infra-red spectroscopy**

In order to characterize chemical structure of the layered double hydroxide, analysis using infra-red spectroscopy (JASCO FT/IR-6100) was carried out. The results obtained are shown in FIG. 5, and chemical bonds according to the peaks are illustrated in Table 2.

**Table 2**

| Wavenumber ($cm^{-1}$) | | Assignment |
|---|---|---|
| Layered double hydroxide naturally existing | Layered double hydroxide according to the present invention (HT-$NO_2$) | |
| 3450 | 3450 | -OH stretch-vibration |
| 3050 | - | Interaction $H_2O$-$CO_3^{2-}$ interlayer |
| 1620 | 1635 | $H_2O$ bending-vibration interlayer |
| | 1380 | $U_3$ $NO_2^-$ |
| 1350 | - | $U_3$ $CO_3^{2-}$ |
| 950 | - | Al-OH deformation |
| 770 | 770 | Al-OH translation |
| 678 | - | $U_4$ $CO_3^{2-}$ |
| 555 | 555 | Al-OH translation |
| 455 | 455 | Metal-OH translation |

As can be seen from the table 2, the naturally existing layered double hydroxide comprises the magnesium-aluminium hydroxide layer with carbonate ions existing between the layers. The layered double hydroxide prepared according to the present invention comprises magnesium-aluminium hydroxide layer with nitrite ions existing between the layers. They are thus the equivalent chemical compounds except for the types of anions existing between the layers.

**Experimental example 4: Corrosion test of reinforcing steel**

Corrosion test of reinforcing steel was performed in order to evaluate the chloride resistance function of the layered double hydroxide prepared according to the present invention. A standard saline solution of 3.5% chloride was prepared, and then the sample was charged into the solution and mixed. Steel was immersed into the resulting solution and was observed for three days. A comparative experiment was carried out with $Ca(NO_2)_2$ currently used as a corrosion inhibitor for concretes. The results, as illustrated in FIG. 6, show that corrosion took place to a great extent on the steel where no corrosion inhibitor was added, while no corrosion occurred on the steel where the corrosion inhibitor was added. In addition, the corrosion effects of $Ca(NO_2)_2$ and the layered double hydroxide on both steels, respectively, had no difference.

As a result, it is confirmed that the layered double hydroxide prevents corrosion of reinforcing steel by scavenging chloride ions from the chloride solution.

**Experimental example 5: Concrete test**

Nano-hybrid chemical admixture by layered double hydroxide and polyurethane copolymer for chloride resistant concrete obtained in Examples 1 to 5, Chemical admixture by polycarboxylic acid polymers obtained in Comparative Examples 1 to 5 and chloride penetration resistant nano-hybrid chemical admixture obtained in Comparative Examples 6 to 7 were applied to concretes. The resulting physical and chemical properties were evaluated.

The test results showing slump flows and compressive strengths are shown in Table 3 and Table 4, respectively. In addition, the concrete chemical admixture used herein is composed of a polycarboxylic acid concrete chemical admixture prepared by Silkroad C&T Co. Ltd. based in Seoul, South Korea, and the concrete chemical admixture prepared in Examples 1 to 5 and Comparative examples 1 to 5 in a predetermined ratio of 7:3. The concrete tests were carried out under the following conditions.

**Concrete test conditions**
Tapping water: 130 kg/$m^3$
Cement (Hanil(KOREA), OPC): 448 kg/$m^3$
Water/cement: 22%
Fine powder: Fly ash 89 kg/$m^3$, Silica fume 53 kg/$m^3$
Fine aggregate: washed sea sand of 277 kg/$m^3$, river sand of 508 kg/$m^3$
Coarse aggregate: 25mm gravel 974 kg/$m^3$
Admixture content: 1.0% of cement weight (admixture content is increased to 1.2% in order to set the same uniform initial dispersion in Comparative Examples 1 to 5. A defoaming agent is added in an amount of 0.12% of the admixture content)
Air entraining admixture content : 0.1% of the admixture content
The ingredients were mixed in a forced pan mixer for 120 sec.
Initial slump flow (50±5cm) was measured immediately after mixing.
**Table 3**

| Copolymer No. | Conditions of concrete (cm) | | | |
|---|---|---|---|---|
| | Immediately | 30 min | 60 min | 90 min |
| S-1 | 57 | 54 | 52 | 50 |
| S-2 | 55 | 57 | 56 | 55 |
| S-3 | 56 | 55 | 54 | 54 |
| S-4 | 54 | 56 | 56 | 55 |
| S-5 | 54 | 58 | 55 | 54 |
| C-1 | 54 | 48 | 40 | - |
| C-2 | 57 | 50 | 42 | - |
| C-3 | 56 | 46 | 39 | - |
| C-4 | 54 | 44 | 39 | - |
| C-5 | 55 | 45 | 40 | - |
| | | | | |
| | | | | |

As can be seen from Table 3, concrete chemical admixture using the polymers (S-1 to S-5) prepared in Examples 1 to 5 are compared with concrete chemical admixture using polymers (C-1 to C-5) prepared in Comparative Examples 1 to 5. The polymer admixture prepared according to the present invention exhibited better water-reducing and improved slump retention ability. This is the reason that urethane derivative-polyethylene glycol chains acting as side chains in the polymer prepared according to the present invention, exhibit better steric hindrance in a strong alkaline slurry state than methoxy polyethyleneglycol chains in conventional concrete chemical admixture. However, concrete chemical admixture containing more than 50% by weight of the layered double hydroxide cannot exhibit sufficient dispersibility.
**Table 4**

| Copolymer no. | Compressive strength (MPa) | | |
|---|---|---|---|
| | 3 days | 7 days | 28 days |
| S-1 | 61.2 | 73.3 | 94.1 |
| S-2 | 60.8 | 73.3 | 95.2 |
| S-3 | 61.5 | 74.2 | 95.8 |
| S-4 | 62.3 | 74.8 | 97.2 |
| S-5 | 63.4 | 77.2 | 98.7 |

(continued)

| Copolymer no. | Compressive strength (MPa) | | |
|---|---|---|---|
| | 3 days | 7 days | 28 days |
| C-1 | 55.3 | 70.6 | 83.1 |
| C-2 | 56.7 | 68.9 | 86.4 |
| C-3 | 57.3 | 69.0 | 88.5 |
| C-4 | 56.4 | 69.8 | 89.4 |
| C-5 | 56.2 | 70.2 | 90.1 |

As can be seen from Table 4, at the same water/cement ratio and aggregate conditions, the concrete chemical admixture S-1 to S-5 prepared in Examples 1 to 5 provides better compressive strengths than concrete chemical admixture C-1 to C-5 prepared in comparative examples 1 to 5. This means that the layered double hydroxide in the chloride penetration resistant nano-hybrid concrete chemical admixture prepared in Examples 1 to 5 imparts considerably high strengths to concretes by improving watertightness and durability.

**Experimental example 6: Accelerated corrosion test of reinforcing steel in concretes**

Accelerated corrosion tests of reinforcing steel in concretes (KS F 2561) were carried out in order to evaluate the function of chloride resistant nano-hybrid concrete chemical admixture by comparing the polyurethane copolymer and the layered double hydroxide prepared in Example 3 with polycarboxylic acid copolymer admixture prepared in Comparative Example 3.

The test was carried out under the following conditions.

Concrete test conditions (KS F 2561)

Tapping water: 131.5 kg/$m^3$

3.5% salt solution: 48.5 kg/$m^3$

Cement (Hanil(KOREA), OPC): 300 kg/$m^3$

Water/cement: 60%

Fine aggregate: washed sea sand of 800 kg/$m^3$

Coarse aggregate: 13mm gravel 1021 kg/$m^3$

Admixture content: 1.2% of cement weight

Materials above were mixed using a pan mixer for 120 seconds and specimens were prepared from the resulting concrete using the standard KS F 2561. The specimens prepared were cured for 5 hours at 180°C and at 1.0 MPa for two times in order to accelerate corrosion of reinforcing steel. The states of corrosion were charted using Mathematical Formula 1 presented in KS F 2561.

$$I = \frac{\Sigma P_{0.2} - \Sigma I_{0.2}}{\Sigma P_{0.2}} \times 100$$

In the Formula 1 above, I represents the anti-corrosion (%), $P_{0.2}$ represents the state of corrosion in concretes without a corrosion inhibitor, $\Sigma P_{0.2}$ represents the total sum of corrosion areas ($mm^2$) on six reinforcing steels in concretes where S-3 was used as a concrete chemical admixture, $I_{0.2}$ represents the state of corrosion in concretes where corrosion inhibitors were added, $\Sigma I_{0.2}$ represents the total sum of corrosion areas of six steels from the concretes where C-3 was used as a concrete chemical admixture.

FIG. 7(A) to 7(F) show results from the accelerated corrosion tests of reinforcing steel in concretes. The results illustrate that the state of corrosion where C-3 was used as a concrete chemical admixture was significantly worse than that where S-3 was used as a concrete chemical admixture. The left reinforcing steels of FIGs. 7(A), 7(B), 7 (E) and 7 (F), and the lower reinforcing steels of FIGs. 7(C) and 7(D) are the reinforcing steels according to the present invention.

The results from the anti-corrosion rate charted using Formula 1 above are summarized in Table 5 below.

**Table 5**

| Copolymer no. | Anti-corrosion rate (%) |
|---|---|

(continued)

| | |
|---|---|
| S-1 | 94.7 |
| S-2 | 95.6 |
| S-3 | 95.4 |
| S-4 | 95.0 |
| S-5 | 96.2 |
| C-1 | 55.3 |
| C-2 | 54.7 |
| C-3 | 57.9 |
| C-4 | 56.1 |
| C-5 | 49.3 |

The results show that the anti-corrosion rate is about 95% or greater if the concrete chemical admixture prepared according to the present invention is used. As a result, chloride penetration resistant nano-hybrid concrete chemical admixture comprising polyurethane copolymer and the layered double hydroxide prevent corrosion of reinforcing steel in concretes.

When the admixture S-1 to S-5 and C-1 to C-5 are used, chloride resistant nano-hybrid concrete chemical admixture comprising polyurethane copolymer and the layered double hydroxide exhibits higher initial dispersion and slump retention with time than those of polycarboxylic acid copolymer. It also improves workability of concrete composition, and enhances resistance to chloride ions by preventing corrosion of reinforcing steel in concretes and improves water tightness as well as durability of concretes, ultimately enhancing the strength of the concrete structure. As a result, provided is an organic/inorganic nano-hybrid concrete chemical admixture, which may be used as a marine concrete chemical admixture with enhanced chloride resistance, which enables enhanced durability of concrete structures.

## Claims

1. A concrete chemical admixture comprising the layered double hydroxide (a) represented by the Formula (I) below and polyurethane copolymer (b) :

$$[M^{2+}_{1-x}N^{3+}_{x}(OH)_2]\ [A^{n-}]_{x/n}\cdot yH_2O \qquad \textbf{Formula (I)}$$

wherein $M^{2+}$ represents a bivalent metal cation, $N^{3+}$ represents a trivalent metal cation, $A^{n-}$ is an anionic compound existing by ionic bonds within the layers of the hydroxide, x is a number greater than 0 and less than 1, and y is a positive integer greater than 0.

2. The concrete chemical admixture according to claim 1, wherein comprises 5 to 50% by weight of the layered double hydroxide (a) and 50 to 95% by weight of the polyurethane copolymer (b) based on the total weight of the concrete chemical admixture.

3. The concrete chemical admixture according to claim 1, wherein $M^{2+}$ is selected from the group consisting of $Mg^{2+}$, $Ca^{2+}$, $Co^{2+}$, $Cu^{2+}$, $Ni^{2+}$, and $Zn^{2+}$, and $N^{3+}$ is selected from the group consisting of $Al^{3+}$, $Cr^{3+}$, $Fe^{3+}$, $Ga^{3+}$, $In^{3+}$, $V^{3+}$, and $Ti^{3+}$.

4. The concrete chemical admixture according to claim 1, wherein $A^{n-}$ is selected from the group consisting of $NO_2^-$, $NO_3^-$, $CO_3^{2-}$, $OH^-$, $O^{2-}$, $SO_4^{2-}$, halogen compound, metalate and organic acid anion.

5. The concrete chemical admixture according to claim 1, wherein the layered double hydroxide comprises the laminated structure with a size in the range of 50 nm to 300 nm.

6. The concrete chemical admixture according to claim 1, wherein the distance between layers in the layered double hydroxide is 0.75 nm to 0.85 nm.

**7.** The concrete chemical admixture according to claim 1, wherein the polyurethane copolymer (b) is prepared by polymerizing 10 to 95% by weight of at least one type of unsaturated (meta)polyoxyalkylene urethane compound (c), unsaturated organic monomer, represented by the Formula (II) below, and 2 to 50% by weight of unsaturated anionic organic monomer (d), represented by the Formula (III) below, based on the total weight of the polyurethane copolymer (b)

Formula (II)

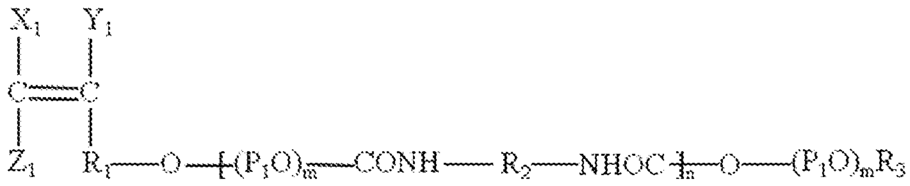

wherein $X_1$, $Y_1$ and $Z_1$ are each independently identical or different and are selected from the group consisting of hydrogen (-H), a methyl group ($-CH_3$) and a carboxylic group (-COOH); $R_1$ represents a $C_1$-$C_6$ hydrocarbon group or a ketone group; $R_2$ represents a $C_6$ aromatic group, a $C_3$-$C_{12}$ cyclic hydrocarbon group or a $C_1$-$C_6$ hydrocarbon group; $R_3$ represents hydrogen (-H) or a $C_1$-$C_6$ hydrocarbon group; $P_1O$ represents at least one $C_2$-$C_{20}$ oxyalkylene group; m is the mean addition number of moles of the oxyalkylene group and represents an integer of 2 to 100; and n is an average mole number of repeat units and represents an integer of 3 to 150:

Formula (III)

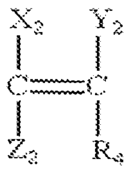

wherein $X_2$, $Y_2$ and $Z_2$ are each independently identical or different and are selected from the group consisting of hydrogen (-H), a methyl group ($-CH_3$) and a carboxylic group (-COOH), provided that one of $X_2$, $Y_2$ and $Z_2$ is hydrogen; and $R_4$ represents a carboxylic group (-COOH) or a nitrile group (-CN).

**8.** The concrete chemical admixture according to claim 7, wherein the unsaturated (meth)polyoxyalkylene urethane compound represented by the Formula (II) is prepared by addition reaction of either unsaturated organic acid or unsaturated alcohol and urethane derivative-polyoxyalkylene.

**9.** The concrete chemical admixture according to claim 8, wherein the unsaturated organic acid is selected from the group consisting of mono-carboxylic acid, dicarboxylic acid and combinations thereof.

**10.** The concrete chemical admixture according to claim 9, wherein the monocarboxylic acid is selected from the group consisting of acrylic acid, methacrylic acid and combinations thereof.

**11.** The concrete chemical admixture according to claim 9, wherein the dicarboxylic acid is selected from the group consisting of maleic acid, itaconic acid, citraconic acid and fumaric acid; mono-valent metal salts, bi-valent metal salts, ammonium salts and organic amine salts thereof; and anhydrides thereof.

**12.** The concrete chemical admixture according to claim 8, wherein the unsaturated alcohol is selected from the group consisting of vinyl alcohol, (meta)allyl alcohol, 3-buten-1-ol, isoprene alcohol, 3-methyl-2-buten-1-ol, 2-methyl-3-buten-1-ol, 2-methyl-3-buten-2-ol and 2-methyl-2-buten-1-ol.

**13.** The concrete chemical admixture according to claim 8, wherein the urethane derivative is the diisocyanate derivative comprising a $C_6$ aromatic hydrocarbon, a $C_3$-$C_{12}$ ring-shaped hydrocarbon or a $C_1$-$C_6$ linear hydrocarbon group.

**14.** The concrete chemical admixture according to claim 13, wherein the urethane derivative is selected from the group consisting of 2,4-toluene diisocyanate, methylenediphenyl-4,4'-diisocyanate, tetramethyl-1,3-xylene diisocyanate, para-phenylene diisocyanate, 1,6-hexamethylene diisocyanate, 1,5-naphthalene diisocyanate, isoporon diisocyanate, cyclohexylmethane diisocyanate and combinations thereof.

**15.** The concrete chemical admixture according to claim 8, wherein the polyoxyalkylene derivative is selected from the group consisting of ethylene glycol, propylene glycol, butylene glycol, isobutylene glycol and combinations thereof.

**16.** The concrete chemical admixture according to claim 7, wherein the mean addition number of moles of the urethane derivative-polyoxyalkylene group m is an integer of 6 to 100.

**17.** The concrete chemical admixture according to claim 7, wherein the unsaturated anionic organic monomer (d) is selected from the group consisting of unsaturated monocarboxylic acid monomers, unsaturated dicarboxylic acid monomers, unsaturated nitrile monomers and combination thereof.

**18.** The concrete chemical admixture according to claim 17, wherein the monocarboxylic acid is selected from the group consisting of acrylic acid, methacrylic acid and combination thereof.

**19.** The concrete chemical admixture according to claim 17, wherein the dicarboxylic acid is selected from the group consisting of maleic acid, itaconic acid, citraconic acid and fumaric acid; mono-valent metal salts, bi-valent metal salts, ammonium salts and organic amine salts thereof; and anhydrides thereof.

**20.** The concrete chemical admixture according to claim 17, wherein the unsaturated nitrile monomer is an acrylonitrile.

**21.** The concrete chemical admixture according to any one of claims 1 to 20, wherein the concrete chemical admixture exhibits 95% or greater anti-corrosion rate during and after the accelerated steel corrosion tests in concretes according to KS F 2561.

FIG. 1

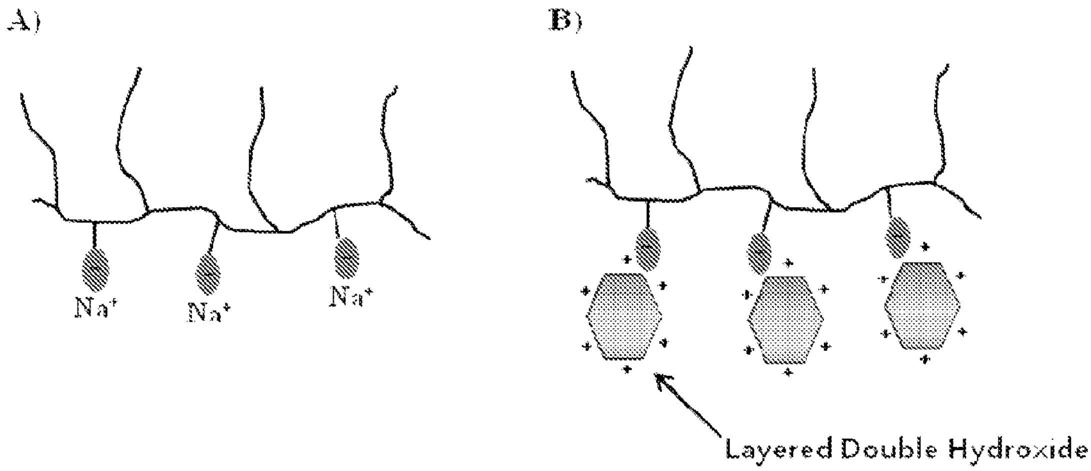
A)
B)
Na+
Na+
Na+
Layered Double Hydroxide

FIG. 2

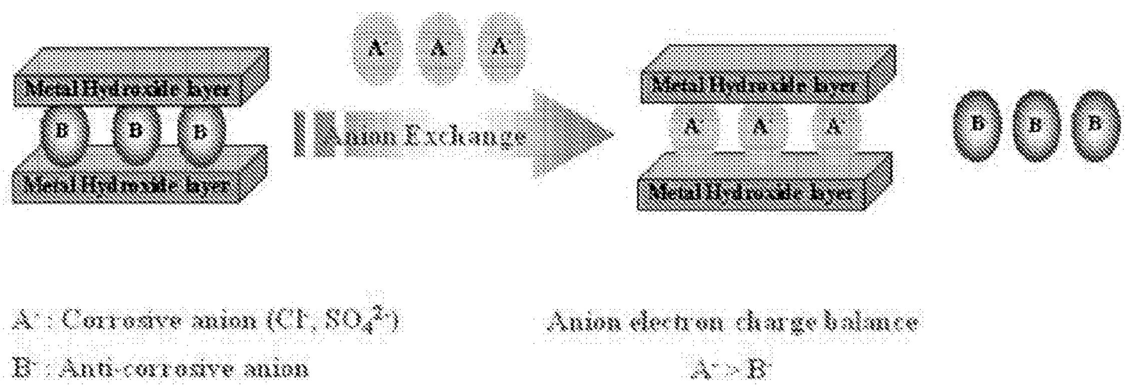
Metal Hydroxide layer
Metal Hydroxide layer
Anion Exchange
Metal Hydroxide layer
Metal Hydroxide layer
A- : Corrosive anion (Cl-, SO4 2-)
B- : Anti-corrosive anion
Anion electron charge balance
A- > B-

FIG. 3

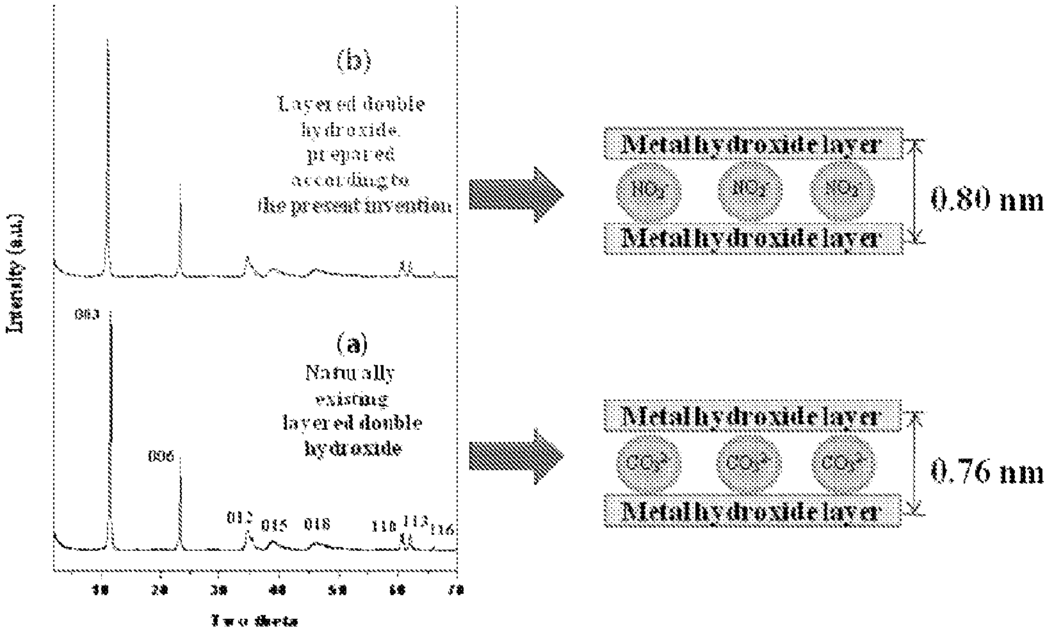
(b)
Layered double hydroxide prepared according to the present invention
(a)
Naturally existing layered double hydroxide
Intensity (a.u.)
Two theta
003
006
012
015
018
110
113
116
Metal hydroxide layer
$NO_3^-$
Metal hydroxide layer
0.80 nm
Metal hydroxide layer
$CO_3^{2-}$
Metal hydroxide layer
0.76 nm

FIG. 4A

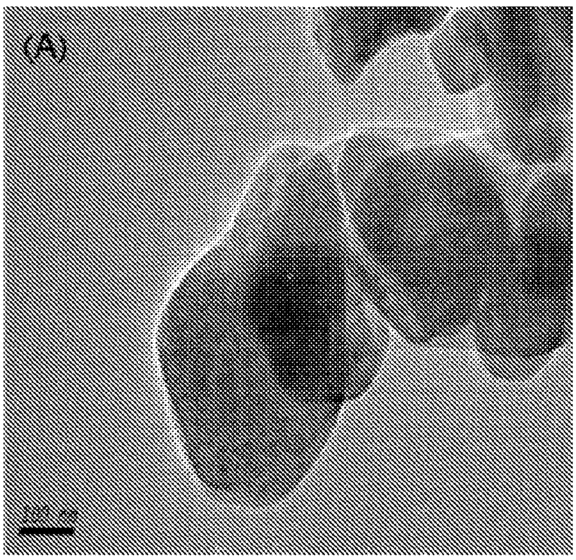
(A)

FIG. 4B

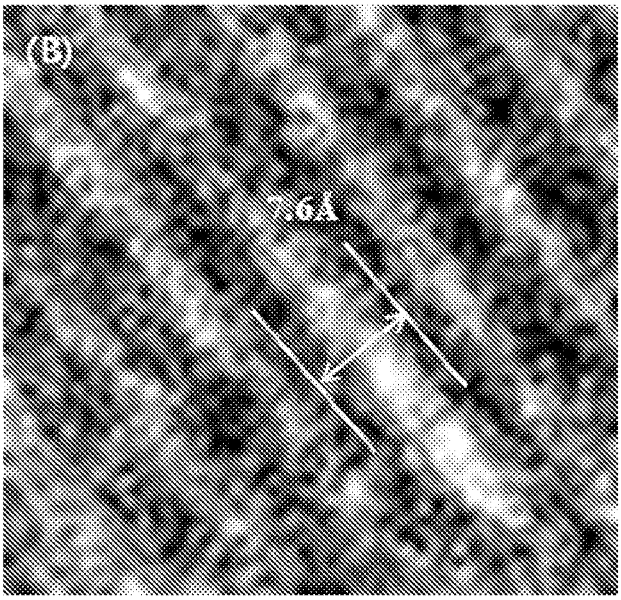


FIG. 4C

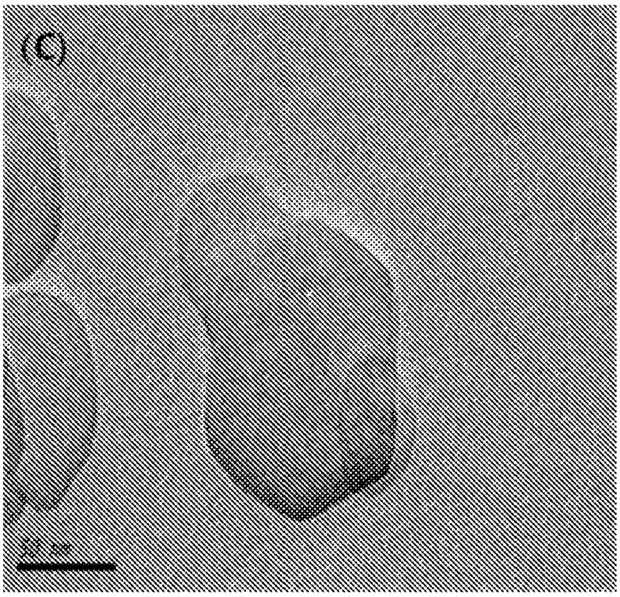

FIG. 4D

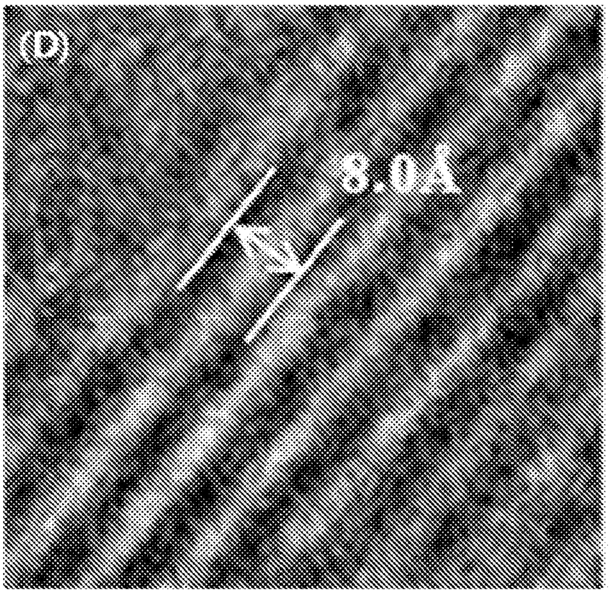

FIG. 5

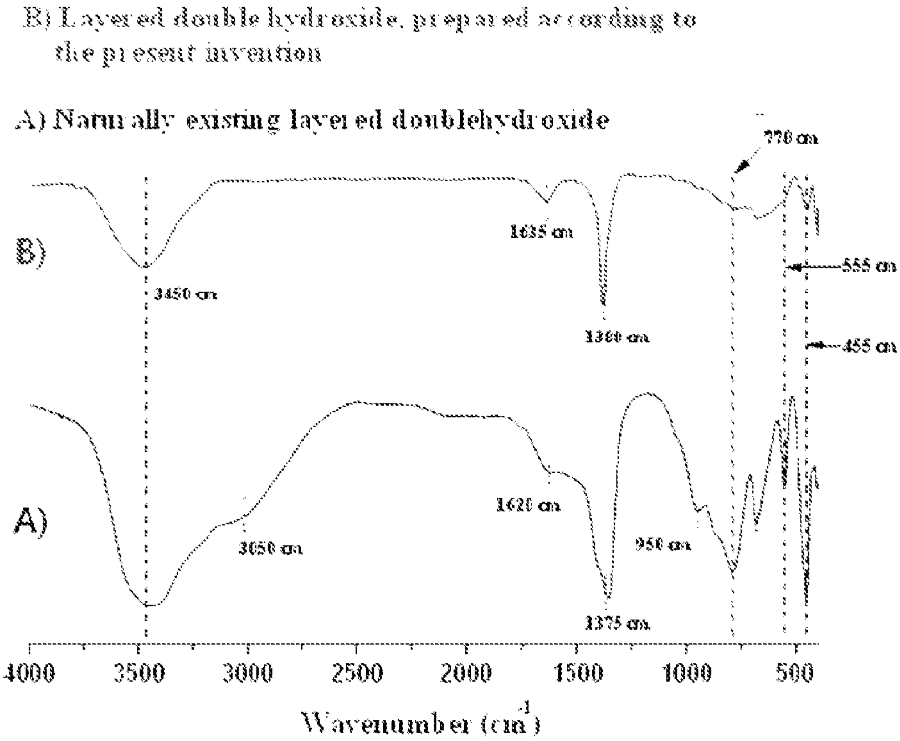
B) Layered double hydroxide, prepared according to the present invention
A) Naturally existing layered doublehydroxide
770 cm
B)
1635 cm
3450 cm
1360 cm
555 cm
455 cm
A)
1620 cm
3050 cm
950 cm
1375 cm
4000
3500
3000
2500
2000
1500
1000
500
Wavenumber (cm-1)

FIG. 6

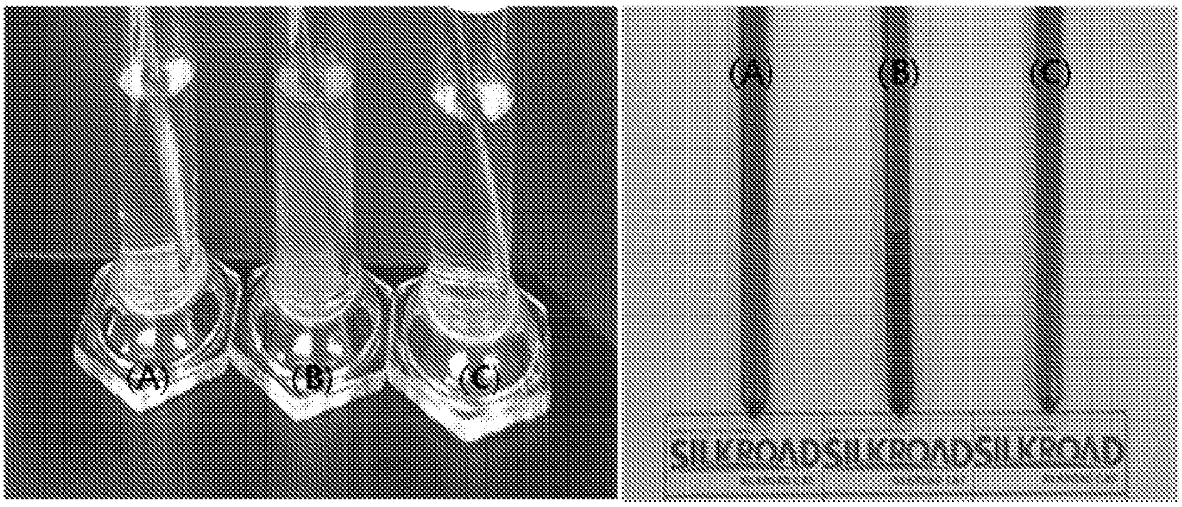
(A)
(B)
(C)
(A)
(B)
(C)
SILKROADSILKROADSILKROAD

FIG. 7A

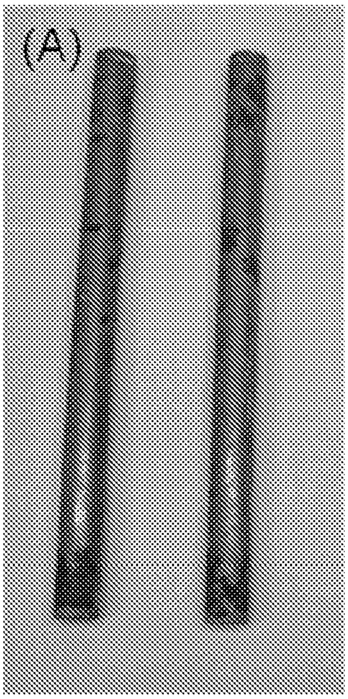


FIG. 7B

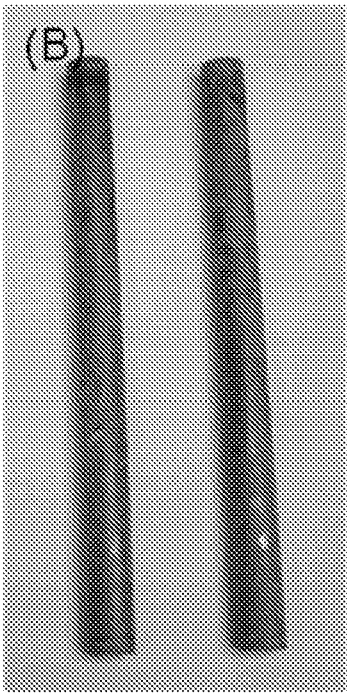

FIG. 7C

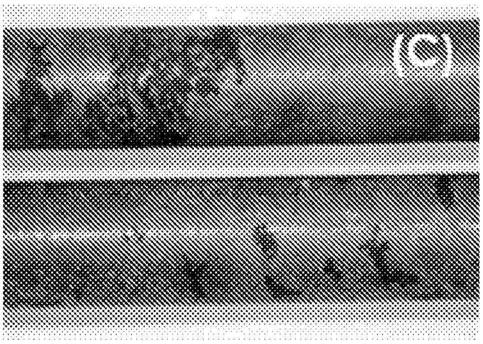


FIG. 7D

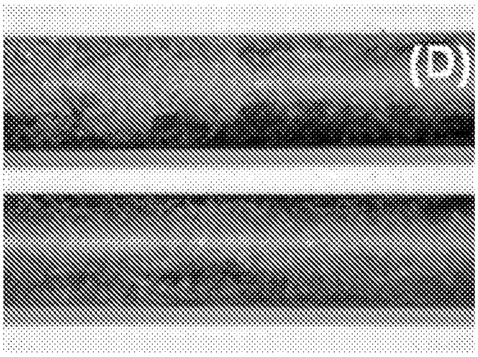


FIG. 7E

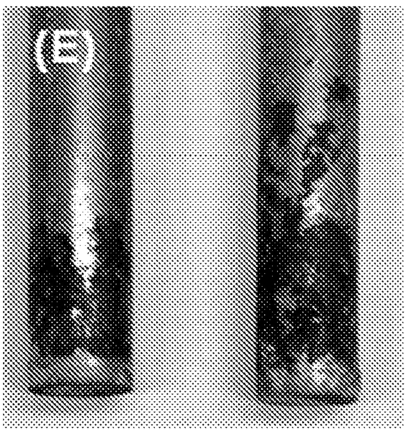

FIG. 7F

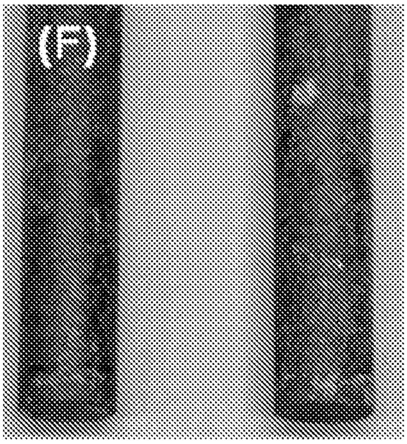

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020100071789
- KR 100548645
- KR 100527978
- KR 100370961
- KR 100909220
- EP 1262499 A1
- US 5447969 A


### Non-patent literature cited in the description


- **J.T. SONG et al.** *Jour. of Kor. Ceramic Soc.,* 2004, vol. 41, 302-312
- **PIERRE-CLAUDE AITCIN.** *Binders for Durable and Sustainable Concrete,* 146-205
- **V. RIVES.** Layered Double Hydroxides: Present and Future. Nova Science Publisher Inc, 2001
- **V. RIVES.** *Meter. Chem. Phys.,* 2002, vol. 75, 19